# EUROPÄISCHE PATENTANMELDUNG

(11) **EP 2 662 204 A1**
(43) Veröffentlichungstag der Anmeldung: **13.11.2013**
(21) Anmeldenummer: 12003602.5
(22) Anmeldetag: 07.05.2012
(51) Int. Cl.: B29C 70/68, B29C 33/14, F03D 1/06

(54) **Verfahren, vorgefertiges Bauelement und Form zur Herstellung eines Windenergieanlagenbauteils**

(71) Anmelder: Nordex Energy GmbH, 22419 Hamburg (DE)
(72) Erfinder: Austinat, Dirk, 17126 Jarmen (DE); Frankowski, Marco, 18347 Wustrom (DE)
(74) Vertreter: Hauck Patent- und Rechtsanwälte

(57) **Zusammenfassung**

Verfahren zur Herstellung eines Windenergieanlagenbauteils, bei dem mehrere Komponenten in einer Form, deren Innenseite eine Oberfläche des Windenergieanlagenbauteils vorgibt, angeordnet und miteinander verbunden werden, wobei mindestens eine der Komponenten ein vorgefertigtes Bauelement ist, das eine feste Geometrie mit einer äußeren Fläche aufweist, dadurch gekennzeichnet, dass das vorgefertigte Bauelement einen aus der äußeren Fläche hervorstehenden Positionierungsvorsprung und die Form an ihrer Innenseite eine Positionierungsaufnahme aufweist, wobei der Positionierungsvorsprung formschlüssig in die Positionierungsaufnahme eingesetzt wird, um die Anordnung des vorgefertigten Bauelements in der Form vorzugeben.

## Beschreibung

Die Erfindung betrifft ein Verfahren zur Herstellung eines Windenergieanlagenbauteils, bei dem mehrere Komponenten in einer Form, deren Innenseite eine Oberfläche des Windenergieanlagenbauteils vorgibt, angeordnet und miteinander verbunden werden. Mindestens eine der Komponenten ist ein vorgefertigtes Bauelement, das eine feste Geometrie mit einer äußeren Fläche aufweist. Die Erfindung betrifft außerdem ein solches vorgefertigtes Bauelement und eine Form zur Herstellung eines solchen Windenergieanlagenbauteils.

Windenergieanlagenbauteile der hier betrachteten Art werden häufig aus faserverstärkten Kunststoffmaterialien hergestellt. Dies gilt insbesondere für die Rotorblätter. Hierzu werden Formen verwendet, in die geeignete Fasermaterialien eingelegt werden. Die Fasermaterialien sind in ein Kunststoffmaterial eingebettet, das in der Form aushärtet. Außerdem ist bekannt geworden, vorgefertigte Bauteile zu verwenden. Dabei kann es sich zum Beispiel um Elemente einer Tragstruktur für das Windenergieanlagenbauteil handeln, wie beispielsweise Stege oder Gurte eines Windenergieanlagenrotorblatts oder um Elemente der Rotorblattschale. Die Elemente können in gesonderten Formen ebenfalls aus faserverstärktem Kunststoff vorgefertigt werden. Durch die Verwendung vorgefertigter Bauteile kann die Prozesssicherheit insbesondere bei komplexen Windenergieanlagenbauteilen verbessert werden.

Um die Maßhaltigkeit auch bei Bauteilen mit komplexer Geometrie sicherzustellen, ist bekannt geworden, das vorgefertigte Bauteil und weitere Komponenten für das Windenergieanlagenbauteil in einer Form anzuordnen und in der Form miteinander zu verbinden. Hierzu müssen das vorgefertigte Bauteil und die weiteren Komponenten, unabhängig davon, ob es sich dabei um weitere vorgefertigte Elemente oder um erst in der Form hergestellte Komponenten des Windenergieanlagenbauteils handelt, relativ zu einander und zu der Form exakt positioniert werden.

Aus der Druckschrift US 2011/0030183 A1 sind ein Verfahren und eine Vorrichtung zum Zusammenfügen eines Windenergieanlagenrotorblatts bekannt geworden. Die Vorrichtung umfasst ein feststehendes Gestell, in dem ein nasenseitiger Abschnitt des Rotorblatts fixiert wird. Ein endkantenseitiger Abschnitt des Rotorblatts wird in einer Setzvorrichtung fixiert, die anschließend relativ zu dem Gestell ausgerichtet wird. Die Abschnitte werden mithilfe von Vakuumsaugern an dem Gestell bzw. der Setzvorrichtung fixiert. Dann werden die unterschiedlichen, vorgefertigten Rotorblattabschnitte miteinander verklebt. Um sie dabei relativ zu einander exakt auszurichten, kann die Anordnung des jeweiligen Bauteils in dem Gestell bzw. in der Setzvorrichtung justiert werden.

Aus der Druckschrift WO 2012/019610 A1 sind ein Verfahren und eine Vorrichtung zur Herstellung eines Windenergieanlagenrotorblatts bekannt geworden. Bei dem bekannten Verfahren wird eine vorgefertigte Endkante zwischen den Hinterkanten einer druckseitigen und einer saugseitigen Rotorblatthalbschale angeordnet und mit diesen verklebt. Dabei befinden sich die beiden Halbschalen noch in den zu ihrer Herstellung verwendeten Formen. Die vorgefertigte Endkante wird mit Klemmen oder Vakuumsaugern an einer Haltevorrichtung befestigt. Die Haltevorrichtung ist mit einer der Herstellungsformen verbunden, wobei die genaue Positionierung der vorgefertigten Endkante relativ zu den Halbschalen durch Justieren der Position der Haltevorrichtung gegenüber der Form vorgenommen wird.

Davon ausgehend ist es die Aufgabe der Erfindung, ein Verfahren der eingangs genannten Art zur Verfügung zu stellen, mit dem das vorgefertigte Bauelement einfach und exakt in der Form positioniert werden kann, sowie ein hierfür geeignetes vorgefertigtes Bauelement und eine hierfür geeignete Form.

Diese Aufgabe wird gelöst durch das Verfahren mit den Merkmalen des Anspruchs 1. Vorteilhafte Ausgestaltungen sind in den sich anschließenden Unteransprüchen angegeben.

Das Verfahren dient zur Herstellung eines Windenergieanlagenbauteils. Bei dem Verfahren werden mehrere Komponenten in einer Form, deren Innenseite eine Oberfläche des Windenergieanlagenbauteils vorgibt, angeordnet und miteinander verbunden, wobei mindestens eine der Komponenten ein vorgefertigtes Bauelement ist, das eine feste Geometrie mit einer äußeren Fläche aufweist. Das vorgefertigte Bauelement weist einen aus der äußeren Fläche hervorstehenden Positionierungsvorsprung und die Form an ihrer Innenseite eine Positionierungsaufnahme auf, wobei der Positionierungsvorsprung formschlüssig in die Positionierungsaufnahme eingesetzt wird, um die Anordnung des vorgefertigten Bauelements in der Form vorzugeben.

Das Windenergieanlagenbauteil kann beispielsweise ein Rotorblatt oder eine Rotorblatthalbschale sein. Bei dem vorgefertigten Bauelement kann es sich um eine beliebige Komponente des herzustellenden Windenergieanlagenbauteils handeln, die in der Form angeordnet werden soll, beispielsweise um ein Element einer Tragstruktur wie einen Endkantengurt, ein Verstärkungselement für eine Nasenkante des Windenergieanlagenbauteils oder eine Rotorblattendkante. Das vorgefertigte Bauelement weist seine feste Geometrie bereits vor dem Anordnen in der Form auf.

Der Positionierungsvorsprung kann beispielsweise ein Positionierungszapfen, eine Positionierungsrippe oder ein sonstiger Vorsprung sein, der in der gewünschten Weise mit der Positionierungsaufnahme, die eine komplementär ausgebildete Geometrie aufweisen kann, zusammenwirken kann. Der Positionierungsvorsprung befindet sich in einer definierten Position relativ zu dem vorgefertigten Bauelement, so dass eine exakte Positionierung des gesamten Bauelements mithilfe des Positionierungsvorsprungs möglich ist. Hierzu kann das vorgefertigte Bauelement einteilig mit dem Positionierungsvorsprung hergestellt werden.

Die Form weist eine Positionierungsaufnahme auf, die sich ebenfalls in einer definierten Anordnung relativ zu der Form befindet. Der Positionierungsvorsprung wird formschlüssig in die Positionierungsaufnahme eingesetzt, d. h. dass nach dem Einsetzen eine Relativbewegung zwischen Positionierungsvorsprung und Positionierungsaufnahme in mindestens einer Bewegungsrichtung durch aneinanderstoßende Flächen von Positionierungsvorsprung und Positionierungsaufnahme verhindert wird. Bevorzugt wird eine solche Relativbewegung in mindestens zwei senkrecht zu einander angeordneten Raumrichtungen verhindert oder in sämtlichen Raumrichtungen, gegebenenfalls mit Ausnahme einer einzigen Bewegungsrichtung, die entgegengesetzt zu der Richtung beim Einsetzen des Positionierungsvorsprungs in die Positionierungsaufnahme gerichtet ist. Dadurch ist das vorgefertigte Bauelement nach dem Einsetzen des Positionierungsvorsprungs in die Positionierungsaufnahme in seiner vorgesehenen Anordnung relativ zu der Form angeordnet. Der Positionierungsvorsprung und die Positionierungsaufnahme können gleichzeitig das vorgefertigte Bauelement in dieser Montageposition halten. Alternativ oder zusätzlich kann das vorgefertigte Bauelement an einer Innenseite der Form anliegen, so dass die Haltefunktion nur teilweise von dem Positionierungsvorsprung und der Positionierungsaufnahme ausgeübt wird.

Beim Einsetzen des Positionierungsvorsprungs in die Positionierungsaufnahme kann der Positionierungsvorsprung insbesondere entlang einer vorgegebenen Einsetzrichtung in die Positionierungsaufnahme eingeschoben werden. Diese Einsetzrichtung kann insbesondere entlang eines dem vorgefertigten Bauteil benachbarten Abschnitts der Innenseite der Form verlaufen.

Es versteht sich, dass das vorgefertigte Bauteil eine Vielzahl von Positionierungsvorsprüngen und die Form eine entsprechende oder größere Anzahl von Positionierungsaufnahmen aufweisen kann, um eine exakte Positionierung des vorgefertigten Bauteils an mehreren beabstandeten Orten sicherzustellen und um gegebenenfalls die erforderlichen Haltekräfte aufbringen zu können. Bei Verwendung einer Vielzahl von Positionierungsvorsprüngen und Positionierungsaufnahmen sind bevorzugt die Einsetzrichtungen aller Positionierungsvorsprünge und -aufnahmen parallel zu einander ausgerichtet. Das vorgefertigte Bauteil kann dann in einer einzigen, translatorischen Bewegung in die Form eingesetzt werden.

Das Anordnen des vorgefertigten Bauelements in der Form kann vor oder nach dem Anordnen der weiteren Komponenten des Windenergieanlagenbauteils in der Form erfolgen. Es ist auch möglich, einen Teil der weiteren Komponenten vor dem vorgefertigten Bauteil und einen anderen Teil der weiteren Komponenten nach dem vorgefertigten Bauteil in der Form anzuordnen, sodass das vorgefertigte Bauteil und die weiteren Komponenten einander in der gewünschten Weise gegebenenfalls auch mehrfach überlappen können.

Durch die Erfindung wird das exakte Positionieren des vorgefertigten Bauelements in der Form erheblich vereinfacht. Es ist nicht erforderlich, zusätzliche Befestigungseinrichtungen wie beispielsweise Klemmen oder Vakuumsauger an dem vorgefertigten Bauteil zu befestigen. Ein manuelles Justieren des vorgefertigten Bauelements relativ zu der Form ist ebenfalls nicht erforderlich. Es muss auch keine Messung vorgenommen werden, um die exakte Positionierung zu überprüfen. Ein weiterer Vorteil ist, dass die weiteren Verfahrensschritte nicht durch gesonderte Befestigungseinrichtungen behindert werden.

In einer Ausgestaltung wird der Positionierungsvorsprung nach dem Verbinden der Komponenten und der Entnahme des fertigen Windenergieanlagenbauteils aus der Form entfernt. Hierzu kann er beispielsweise abgeschnitten, abgeschlagen, abgesägt oder auf sonstige Weise von dem vorgefertigten Bauelement getrennt werden. Nach dem Verbinden der Komponenten wird der Positionierungsvorsprung nicht mehr benötigt. Durch das Entfernen des Positionierungsvorsprungs erhält das Windenergieanlagenbauteil seine vorgesehene Geometrie. Da der Positionierungsvorsprung aus der äußeren Fläche des vorgefertigten Bauelements hervorsteht, hinterlässt das Entfernen des Positionierungsvorsprungs keine Lücke in dem vorgefertigten Bauteil und die strukturelle Integrität des Windenergieanlagenbauteils wird nicht beeinträchtigt.

In einer Ausgestaltung liegt das vorgefertigte Bauelement in der vorgegebenen Anordnung mit der äußeren Fläche an der Innenseite der Form an. Mit anderen Worten bildet die äußere Fläche einen Teil der Oberfläche des Windenergieanlagenbauteils. Durch das Anliegen an der Innenseite der Form wird erreicht, dass die Oberfläche des fertigen Bauteils auch im Bereich des vorgefertigten Bauelements exakt der vorgesehenen Geometrie entspricht.

In einer Ausgestaltung weist eine weitere Komponente ein Fasermaterial auf. Die weitere Komponente wird bei dem Verfahren mit dem vorgefertigten Bauelement verbunden. Das Fasermaterial der weiteren Komponente kann in eine Kunststoffmatrix eingebettet sein. Bei der Ausführung des Verfahrens kann die Kunststoffmatrix mit dem Fasermaterial bereits ausgehärtet sein. Ebenfalls möglich ist die Verwendung einer bei der Ausführung des Verfahrens noch flüssigen Kunststoffmatrix, die beim Verbinden der Komponenten in der Form aushärtet.

In einer Ausgestaltung wird das Fasermaterial so in der Form angeordnet, dass es an eine Innenseite des vorgefertigten Bauteils angrenzt. Dies führt zu einer großflächigen Verbindung des vorgefertigten Bauteils mit der weiteren Komponente. Ebenfalls möglich ist, dass das Fasermaterial bzw. die weitere Komponente das vorgefertigte Bauelement an mindestens zwei Seiten berührt und/oder unter Umständen sogar allseitig umschließt, gegebenenfalls mit Ausnahme des Positionierungsvorsprungs. Die Innenseite kann insbesondere der äußeren Fläche des vorgefertigten Bauteils gegenüberliegen.

In einer Ausgestaltung wird die Form mit den darin angeordneten Komponenten einschließlich des vorgefertigten Bauteils mit einer Vakuumhülle geschlossen und ein flüssiges Kunststoffmaterial härtet in der Form aus. Das flüssige Kunststoffmaterial kann in einem Vakuuminfusionsverfahren in die Form eingebracht werden. Ebenfalls möglich ist die Verwendung sogenannter Prepregs, d. h. bereits vor dem Anordnen in der Form mit dem flüssigen Kunststoffmaterial durchtränkter Fasermaterialien. Durch die Vakuumhülle kann in der Form ein Unterdruck erzeugt werden, einerseits für die Vakuuminfusion, andererseits, bei der Verwendung von Prepregs, zum Komprimieren der in der Form enthaltenen Komponenten und zum Anpressen derselben an die Innenseite der Form. Die Verwendung einer Vakuumhülle wird durch die Positionierungsvorsprünge und -aufnahmen wesentlich vereinfacht, weil keine besonderen Vorkehrungen zur Abdichtung der Form in Verbindung mit separaten Befestigungseinrichtungen für das vorgefertigte Bauelement getroffen werden müssen. Bei der Erfindung ist die Verwendung einer Vakuumhülle ebenso unproblematisch möglich wie bei herkömmlichen Herstellungsverfahren für Windenergieanlagenbauteile, die ohne vorgefertigte Bauelemente auskommen.

In einer Ausgestaltung sind das vorgefertigte Bauelement und/oder die Form entsprechend einer der nachfolgend erläuterten Ausgestaltungen ausgebildet.

Die oben genannte Aufgabe wird ebenfalls gelöst durch das vorgefertigte Bauelement mit den Merkmalen des Anspruchs 8. Vorteilhafte Ausgestaltungen sind in den sich anschließenden Unteransprüchen angegeben.

Das vorgefertigte Bauelement dient zur Herstellung eines Windenergieanlagenbauteils in einer Form, deren Innenseite eine Oberfläche des Windenergieanlagenbauteils vorgibt. Das vorgefertigte Bauelement weist eine feste Geometrie mit einer äußeren Fläche auf und einen Positionierungsvorsprung, der aus der äußeren Fläche hervorsteht und dazu bestimmt ist, formschlüssig in eine Positionierungsaufnahme der Form eingesetzt zu werden, um die Anordnung des vorgefertigten Bauelements in der Form vorzugeben.

Zu den Merkmalen des Bauelements und zu den besonderen Vorteilen wird auf die vorstehenden Erläuterungen des erfindungsgemäßen Verfahrens verwiesen, die entsprechend gelten.

In einer Ausgestaltung weist der Positionierungsvorsprung einen Hinterschnitt auf. Der Positionierungsvorsprung kann insbesondere schwalbenschwanzförmig geformt sein. Eine Breite des Positionierungsvorsprungs kann sich mit zunehmendem Abstand von der äußeren Fläche des vorgefertigten Bauelements vergrößern. Durch einen derartigen Hinterschnitt kann die Verbindung aus Positionierungsvorsprung und Positionierungsaufnahme nicht nur eine seitliche Anordnung des vorgefertigten Bauelements vorgeben, sondern auch Zugkräfte aufnehmen und das vorgefertigte Bauelement so noch besser in der gewünschten Anordnung positionieren und/oder halten.

In einer Ausgestaltung weist der Querschnitt des Positionierungsvorsprungs in der Ebene der äußeren Fläche in einer ersten Richtung eine maximale Länge auf und senkrecht dazu eine Breite, wobei die Breite maximal 20 mm beträgt, oder maximal 10 mm. Beispielsweise kann der Positionierungsvorsprung in der genannten Querschnittsebene eine längliche Form, insbesondere rechteckig, aufweisen. Auch eine dreieckige oder trapezförmige Querschnittsfläche ist möglich. Die maximale Länge erstreckt sich in der Längsrichtung des Querschnitts und kann eine größere Länge von beispielsweise mehr als 5 cm, mehr als 10 cm, mehr als 20 cm oder mehr als 30 cm aufweisen. Dadurch, dass die senkrecht zu dieser Maximallänge gemessene Breite den genannten Wert nicht überschreitet, wird das Trennen des Positionierungsvorsprungs von dem vorgefertigten Bauteil vereinfacht. Auch bei einer sehr geringen Breite kann durch eine entsprechend größere maximale Länge eine hinreichende Stabilität des Positionierungsvorsprungs erreicht werden.

In einer Ausgestaltung weist das vorgefertigte Bauelement in eine Kunststoffmatrix eingebettete Verstärkungsfasern auf und ist einteilig mit dem Positionierungsvorsprung ausgebildet. Hierzu kann das vorgefertigte Bauelement einschließlich des Positionierungsvorsprungs insbesondere in einem Vakuuminfusionsverfahren in einer gesonderten Form hergestellt werden. Diese gesonderte Form weist dann eine zu dem Positionierungsvorsprung komplementäre Aussparung auf, sodass der Positionierungsvorsprung bei der Vakuuminfusion automatisch mit dem flüssigen Kunststoffmaterial gefüllt wird. Auf diese Weise wird eine exakte Anordnung des Positionierungsvorsprungs an dem vorgefertigten Bauelement sichergestellt. Die Verstärkungsfasern können so angeordnet werden, dass der Positionierungsvorsprung keine Verstärkungsfasern aufweist. Er kann dann besonders einfach entfernt werden, zum Beispiel durch Abschlagen. Insbesondere in Verbindung mit einem Querschnitt des Positionierungsvorsprungs in der Ebene der äußeren Fläche des vorgefertigten Bauelements, der die oben genannte maximale Breite einhält, kann bei der Vakuuminfusion vermieden werden, dass Verstärkungsfasern, die in der gesonderten Form angeordnet sind, in den Bereich des Positionierungsvorsprungs hineingelangen. Hierdurch wird eine vorteilhafte Anordnung der Verstärkungsfasern in dem vorgefertigten Bauelement erreicht.

In einer Ausgestaltung ist der Positionierungsvorsprung in der Ebene der äußeren Fläche durch eine Abreißgewebe und/oder durch eine steife, flüssigkeitsdurchlässige Schicht vom Rest des vorgefertigten Bauteils getrennt. Durch diese Maßnahmen wird einerseits eine einfache Entfernung des Positionierungsvorsprungs begünstigt, andererseits wird durch die steife, flüssigkeitsdurchlässige Schicht vermieden, dass Verstärkungsfasern in den Bereich des Positionierungsvorsprungs gelangen.

Die oben genannte Aufgabe wird ebenfalls gelöst durch die Form mit den Merkmalen des Anspruchs 13. Vorteilhafte Ausgestaltungen sind in den sich anschließenden Unteransprüchen angegeben.

Die Form dient zur Herstellung eines Windenergieanlagenbauteils. Sie weist eine Innenseite, die eine Oberfläche des Windenergieanlagenbauteils vorgibt, auf und eine Positionierungsaufnahme an der Innenseite, die zur formschlüssigen Aufnahme eines Positionierungsvorsprungs eines vorgefertigten Bauelements des Windenergieanlagenbauteils vorgesehen ist, um die Anordnung des vorgefertigten Bauelements in der Form vorzugeben.

Zu den Merkmalen und Vorteilen der Form wird auf die vorstehenden Erläuterungen des Verfahrens und des vorgefertigten Bauelements verwiesen, die entsprechend gelten.

In einer Ausgestaltung weist die Positionierungsaufnahme eine Nut auf. Die Nut kann insbesondere einen Querschnitt aufweisen, der komplementär zu einem Querschnitt des Positionierungsvorsprungs in einer entsprechenden Schnittebene ist. Insbesondere kann die Nut schwalbenschwanzförmig ausgebildet sein, d. h. im Querschnitt trapezförmig, wobei die längere Grundseite des Trapezes im Inneren der Positionierungsaufnahme angeordnet ist.

In einer Ausgestaltung ist die Positionierungsaufnahme als ein auswechselbar in einer Aussparung der Form befestigter Einsatz ausgebildet. Der Einsatz kann beispielsweise aus einem Silikon oder PTFE (Polytetrafluorethylen) aufweisenden Material bestehen. Der Einsatz kann block- oder quaderförmig ausgebildet sein. Der Einsatz kann eine der Innenseite der Form zugewandte Fläche aufweisen, die einen Abschnitt der Innenseite der Form bildet. Der Einsatz kann in die Aussparung der Form eingeklebt oder auf sonstige Weise darin befestigt sein. Die Verwendung eines solchen Einsatzes ermöglicht ein einfaches Instandsetzen der Form, falls eine Positionierungsaufnahme zum Beispiel nach vielfacher Benutzung beschädigt sein sollte. In diesem Fall kann der Einsatz mit der beschädigten Positionierungsaufnahme von der Form getrennt und durch einen neuen Einsatz ersetzt werden.

Die Erfindung wird nachfolgend anhand eines in zwei Figuren dargestellten Ausführungsbeispiels näher erläutert. Es zeigen:
- Fig. 1: eine schematische Darstellung zur Anordnung eines vorgefertigten Bauteils in einer Form im Querschnitt,
- Fig. 2: eine Draufsicht auf die Anordnung aus Fig. 1 von oben und
- Fig. 3: eine schematische Darstellung eines vorgefertigten Bauteils in einer Form.

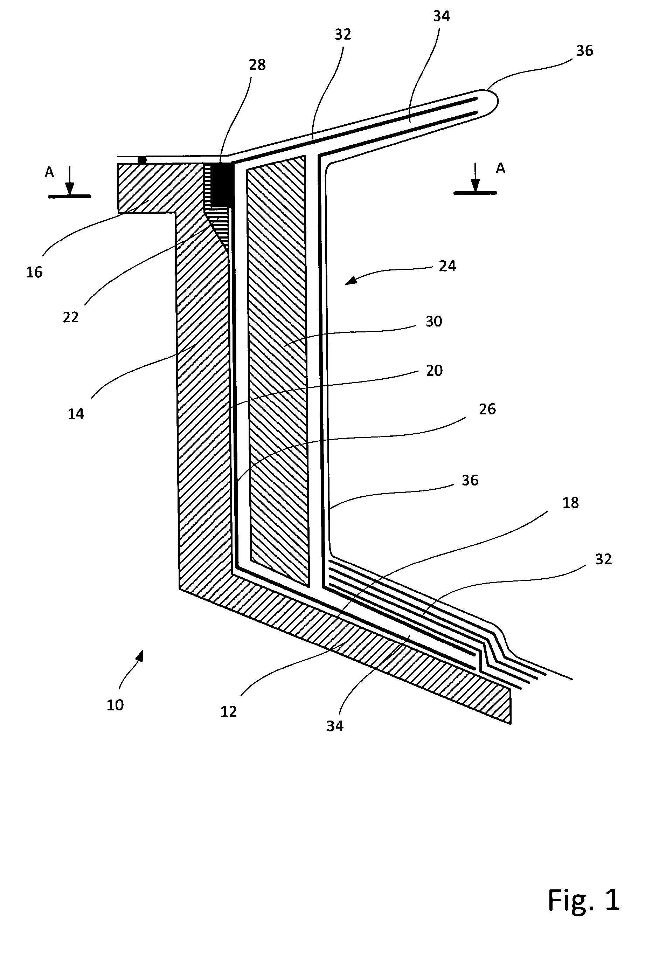

Fig. 1 zeigt eine Form zur Herstellung einer saugseitigen Windenergieanlagenrotorblatthalbschale. Die Form 10 weist einen Saugseitenabschnitt 12 und einen sich daran anschließenden Endkantenabschnitt 14, der im Wesentlichen senkrecht angeordnet ist, auf. Außerdem hat die Form 10 einen Rand 16.

Entsprechend dem Saugseitenabschnitt 12 und dem Endkantenabschnitt 14 weist die Form 10 einen ersten Innenseitenabschnitt 18, der die Oberfläche der Saugseite des Rotorblatts vorgibt, und einen zweiten Innenseitenabschnitt 20, der die Oberfläche der Endkante des Rotorblatts vorgibt, auf.

An der Innenseite der Form 10, genauer am zweiten Innenseitenabschnitt 20, weist die Form 10 eine Positionierungsaufnahme 22 auf. Diese befindet sich in einem oberen Bereich des Endkantenabschnitts 14 der Form 10.

In der Form 10 befindet sich ein vorgefertigtes Bauelement 24 für eine sogenannte dicke Endkante mit einem Sandwich-Aufbau, das eine feste Geometrie mit einer äußeren Fläche 26 aufweist. Die äußere Fläche 26 liegt am zweiten Innenseitenabschnitt 20 der Form 10 an. Außerdem hat das vorgefertigte Bauelement 24 einen Positionierungsvorsprung 28, der in der Fig. 1 bereits in die Positionierungsaufnahme 22 eingesetzt ist. Hierzu wurde das vorgefertigte Bauteil 24 mit dem Positionierungsvorsprung 28 von oben in die Positionierungsaufnahme 22 eingeschoben.

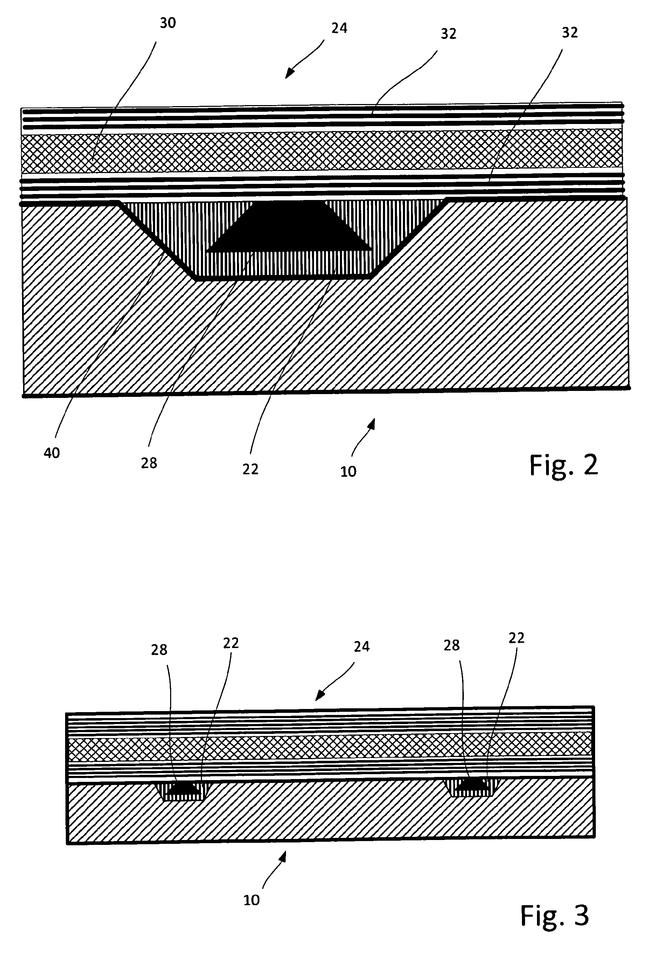

Das in Sandwichbauweise vorgefertigte Bauteil 24 weist einen Kern 30, beispielsweise aus einem geschäumten Material oder aus Balsaholz und ein diesen Kern 30 umgebendes, in eine bereits ausgehärtete Kunststoffmatrix eingebettetes Fasermaterial 32 auf. Das vorgefertigte Bauteil 24 wurde in einer gesonderten Herstellungsform in einem Vakuuminfusionsverfahren hergestellt, wobei der Kern 30 in das den Kern 30 an allen vier in der Fig. 2 gezeigten Seiten umgebende Fasermaterial 32 eingebettet und gleichzeitig der Positionierungsvorsprung 28 ausgebildet wurde.

Die weiteren Komponenten des Windenergieanlagenbauteils sind in der Fig. 1 nur angedeutet. Erkennbar sind weitere Lagen eines Fasermaterials 32, die an dem ersten Innenseitenabschnitt 18 der Form 10 anliegen und die Saugseite des Windenergieanlagenrotorblatts bilden. Bei dem Verfahren werden diese weiteren Lagen des Fasermaterials 32 mit flanschartig vorstehenden Befestigungsabschnitten 34 des vorgefertigten Bauelements 24 verbunden. Hierzu kann das die Saugseite bildende Fasermaterial 32 insbesondere trocken in die Form 10 eingelegt werden. Zuvor wurde bereits das vorgefertigte Bauelement 24 in der beschriebenen Weise in der Form 10 angeordnet. Anschließend wird die Form 10 mit einer Vakuumhülle 36, beispielsweise in Form einer Vakuumfolie, geschlossen und das die Saugseite bildende Fasermaterial 32 wird in einem Vakuuminfusionsverfahren mit einem flüssigen Kunststoffmaterial durchtränkt, das nachfolgend in der Form 10 aushärtet.

In der Fig. 2 ist ein Querschnitt entlang der in der Fig. 1 mit A-A bezeichneten Ebene dargestellt. Man erkennt den Sandwichaufbau des vorgefertigten Bauteils 24 mit dem Kern 30 und den beidseits davon angeordneten Lagen des Fasermaterials 32. Gut erkennbar ist der im Querschnitt schwalbenschwanzförmige Positionierungsvorsprung 28. Die komplementär geformte Positionierungsaufnahme 22 in der Form 10 besteht aus PTFE, ist im Querschnitt trapezförmig und in eine komplementär ausgebildete Aussparung 40 in der Form 10 eingeklebt.

Fig. 3 zeigt ein in die Form 10 eingesetztes Bauteil 24. Das vorgefertigte Bauteil besitzt zwei Positionierungsvorsprünge 28, mit welchen es in entsprechende Positionierungsaufnahmen 22 in der Form 10 eingreift. Es versteht sich, dass über die Länge des Bauteils weitere Positionierungsvorsprünge und an der Form weitere Positionierungsaufnahmen angeordnet sein können.

### Liste der verwendeten Bezugszeichen:

- 10: Form
- 12: Saugseitenabschnitt
- 14: Endkantenabschnitt
- 16: Rand
- 18: Erster Innenseitenabschnitt
- 20: Zweiter Innenseitenabschnitt
- 22: Positionierungsaufnahme
- 24: Vorgefertigtes Bauelement
- 26: Äußere Fläche
- 28: Positionierungsvorsprung
- 30: Kern
- 32: Fasermaterial
- 34: Befestigungsabschnitt
- 36: Vakuumhülle
- 40: Aussparung

## Patentansprüche

1. Verfahren zur Herstellung eines Windenergieanlagenbauteils, bei dem mehrere Komponenten in einer Form (10), deren Innenseite eine Oberfläche des Windenergieanlagenbauteils vorgibt, angeordnet und miteinander verbunden werden, wobei mindestens eine der Komponenten ein vorgefertigtes Bauelement (24) ist, das eine feste Geometrie mit einer äußeren Fläche (26) aufweist, **dadurch gekennzeichnet, dass** das vorgefertigte Bauelement (24) einen aus der äußeren Fläche (26) hervorstehenden Positionierungsvorsprung (28) und die Form (10) an ihrer Innenseite eine Positionierungsaufnahme (22) aufweist, wobei der Positionierungsvorsprung (28) formschlüssig in die Positionierungsaufnahme (22) eingesetzt wird, um die Anordnung des vorgefertigten Bauelements (24) in der Form (10) vorzugeben.

2. Verfahren nach Anspruch 1, **dadurch gekennzeichnet, dass** der Positionierungsvorsprung (28) nach dem Verbinden der Komponenten in der Form (10) entfernt wird.

3. Verfahren nach Anspruch 1 oder 2, **dadurch gekennzeichnet, dass** das vorgefertigte Bauelement (24) in der vorgegebenen Anordnung mit der äußeren Fläche (26) an der Innenseite der Form (10) anliegt.

4. Verfahren nach einem der Ansprüche 1 bis 3, **dadurch gekennzeichnet, dass** eine weitere Komponente ein Fasermaterial (32) aufweist.

5. Verfahren nach Anspruch 4, **dadurch gekennzeichnet, dass** das Fasermaterial (32) so in der Form (10) angeordnet wird, dass es an eine Innenseite des vorgefertigten Bauteils (24) angrenzt.

6. Verfahren nach einem der Ansprüche 1 bis 5, **dadurch gekennzeichnet, dass** die Form (10) mit den darin angeordneten Komponenten einschließlich des vorgefertigten Bauteils (24) mit einer Vakuumhülle (36) geschlossen wird und ein flüssiges Kunststoffmaterial in der Form (10) aushärtet.

7. Verfahren nach einem der Ansprüche 1 bis 6, **dadurch gekennzeichnet, dass** das vorgefertigte Bauelement (24) nach einem der Ansprüche 8 bis 12 und/oder die Form (10) nach einem der Ansprüche 13 bis 15 ausgestaltet ist.

8. Vorgefertigtes Bauelement zur Herstellung eines Windenergieanlagenbauteils in einer Form (10), deren Innenseite eine Oberfläche des Windenergieanlagenbauteils vorgibt, wobei das vorgefertigte Bauelement (24) eine feste Geometrie aufweist mit einer äußeren Fläche (26), **dadurch gekennzeichnet, dass** das vorgefertigte Bauelement (24) einen Positionierungsvorsprung (28) aufweist, der aus der äußeren Fläche (26) hervorsteht und dazu bestimmt ist, formschlüssig in eine Positionierungsaufnahme (22) der Form (10) eingesetzt zu werden, um die Anordnung des vorgefertigten Bauelements (24) in der Form (10) vorzugeben.

9. Vorgefertigtes Bauelement (24) nach Anspruch 8, **dadurch gekennzeichnet, dass** der Positionierungsvorsprung (28) einen Hinterschnitt aufweist.

10. Vorgefertigtes Bauelement (24) nach Anspruch 8 oder 9, **dadurch gekennzeichnet, dass** der Querschnitt des Positionierungsvorsprungs (28) in der Ebene der äußeren Fläche (26) in einer ersten Richtung eine maximale Länge aufweist und senkrecht dazu eine Breite, wobei die Breite maximal 20 mm beträgt.

11. Vorgefertigtes Bauelement (24) nach einem der Ansprüche 8 bis 10, **dadurch gekennzeichnet, dass** das vorgefertigte Bauelement (24) in eine Kunststoffmatrix eingebettete Verstärkungsfasern aufweist und einteilig mit dem Positionierungsvorsprung (28) ausgebildet ist.

12. Vorgefertigtes Bauelement (24) nach Anspruch 11, **dadurch gekennzeichnet, dass** der Positionierungsvorsprung (28) in der Ebene der äußeren Fläche (26) durch ein Abreißgewebe und/oder durch eine steife, flüssigkeitsdurchlässige Schicht vom Rest des vorgefertigten Bauteils (24) getrennt ist.

13. Form (10) zur Herstellung eines Windenergienanlagenbauteils mit einer Innenseite, die eine Oberfläche des Windenergieanlagenbauteils vorgibt, **dadurch gekennzeichnet, dass** die Form (10) an der Innenseite eine Positionierungsaufnahme (22) aufweist, die zur formschlüssigen Aufnahme eines Positionierungsvorsprungs (28) eines vorgefertigten Bauelements (24) des Windenergieanlagenbauteils vorgesehen ist, um die Anordnung des vorgefertigten Bauelements (24) in der Form (10) vorzugeben.

14. Form (10) nach Anspruch 13, **dadurch gekennzeichnet, dass** die Positionierungsaufnahme (22) eine Nut aufweist.

15. Form (10) nach Anspruch 13 oder 14, **dadurch gekennzeichnet, dass** die Positionierungsaufnahme (22) als ein auswechselbar in einer Aussparung (40) der Form (10) befestigter Einsatz ausgebildet ist.
